# EUROPEAN PATENT APPLICATION

(11) **EP 4 604 280 A1**
(43) Date of publication of application: **20.08.2025**
(21) Application number: 25158613.7
(22) Date of filing: 18.02.2025
(51) Int. Cl.: H01M 50/105, H01M 50/124, H01M 50/184, H01M 50/186, H01M 50/197, H01M 50/121

(54) **PACKAGING BAG, BATTERY CELL, AND ELECTRICAL DEVICE**

(30) Priority: 19.02.2024 CN 202410186400
(71) Applicant: Ningde Amperex Technology Limited, Ningde, Fujian 352100 (CN)
(72) Inventor: LI, Chenchen, Ningde City, Fujian Province, 352100 (CN); WU, Hua, Ningde City, Fujian Province, 352100 (CN)
(74) Representative: Icosa

(57) **Abstract**

A packaging bag (100), a battery cell (200), and an electrical device (300) are disclosed. The packaging bag (100) is configured to accommodate an electrode assembly (30). The packaging bag (100) includes a first packaging film (10) and a second packaging film (20). The first packaging film (10) includes a first lateral edge (101) and a second lateral edge (102) arranged along a first direction (X). The first lateral edge (101) and the second lateral edge (102) extend along a second direction (Y). Along a third direction (Z), the second packaging film (20) is configured to cover and connect the first lateral edge (101) and the second lateral edge (102), so that the packaging bag (100) wraps around to form an accommodation portion (12). The packaging bag (100) forms a top seal portion (11), the accommodation portion (12), and a bottom seal portion (13) sequentially in the second direction (Y). The accommodation portion (12) is configured to accommodate the electrode assembly (30). The first direction (X), the second direction (Y), and the third direction (Z) are perpendicular to each other. The packaging bag (100) improves space efficiency.

## Description

### TECHNICAL FIELD

This application relates to the technical field of energy storage, and in particular, to a packaging bag, a battery cell, and an electrical device.

### BACKGROUND

With miniaturization of terminal devices such as smartphones and tablet computers, less space is available to a battery in a terminal device, and development and use of ultra-thin battery cells have become a trend.

Currently, a packaging bag for an ultra-thin battery cell is typically made of an aluminum laminated film by indentation, folding, and hot-press sealing. The packaging bag includes packaging edges in a length direction and a width direction of the battery cell. The packaging edges occupy a relatively large space in the length direction and a thickness direction, resulting in low space efficiency of the battery cell.

### SUMMARY

In view of the above situation, it is necessary to provide a packaging bag to improve space efficiency.

An embodiment of this application provides a packaging bag configured to accommodate an electrode assembly. The packaging bag includes a first packaging film and a second packaging film. The first packaging film includes a first lateral edge and a second lateral edge arranged along a first direction. The first lateral edge and the second lateral edge extend along a second direction. Along a third direction, the second packaging film is configured to cover and connect the first lateral edge and the second lateral edge, so that the packaging bag wraps around to form an accommodation portion. The packaging bag forms a top seal portion, the accommodation portion, and a bottom seal portion sequentially in the second direction. The accommodation portion is configured to accommodate the electrode assembly. The first direction, the second direction, and the third direction are perpendicular to each other.

In the packaging bag, the second packaging film is configured to cover and connect the first lateral edge and the second lateral edge, so that the packaging bag wraps around to form an accommodation portion. The packaging bag forms a top seal portion, the accommodation portion, and a bottom seal portion sequentially in the second direction. The first lateral edge and the second lateral edge each extend through the top seal portion, the accommodation portion, and the bottom seal portion in sequence. The second packaging film is configured to seal a region between the first lateral edge and the second lateral edge to improve the sealing performance of the packaging bag. In addition, the top seal portion, the accommodation portion, and the bottom seal portion each perform packaging on both sides of the first direction through the bend portion of the first packaging film, thereby reducing the space occupied by the packaging bag in the first direction in contrast to the existing packaging method in which a side seal edge is disposed, and in turn, improving the space efficiency of the packaging bag.

In some embodiments of this application, the second packaging film is connected to one side of the first packaging film, the side facing the electrode assembly. In this way, it is convenient to connect the second packaging film to the first packaging film on one side provided with a melting layer.

In some embodiments of this application, the first packaging film includes a first metal layer as well as a first melting layer and a protection layer located on two sides, respectively, of the first metal layer in a thickness direction. The second packaging film includes a second metal layer and two second melting layers located on two sides, respectively, of the second metal layer in a thickness direction. One of the second melting layers located at the accommodation portion is connected to the first melting layer, each of the two second melting layers located at the top seal portion is connected to an adjacent first melting layer, and each of the two second melting layers located at the bottom seal portion is connected to an adjacent first melting layer. The second melting layer is connected to the first melting layer to improve the sealing performance of the packaging bag.

In some embodiments of this application, another second melting layer located at the accommodation portion is connected to the electrode assembly to improve the stability of the electrode assembly in the packaging bag.

In some embodiments of this application, a melting point T1 of the first melting layer and a melting point T2 of the second melting layer satisfy: 200 °C ≤ T1 ≤ 230 °C, 200 °C ≤ T2 ≤ 230 °C, and T1 = T2. In this way, it is convenient for the first melting layer and the second melting layer to melt and connect together at the same temperature, thereby improving the sealing performance of the first melting layer and the second melting layer. In addition, when T1 and T2 are relatively low (less than 200 °C), the first melting layer or the second melting layer are prone to melt at the normal operating temperature of the electrode assembly, thereby impairing the sealing performance of the packaging bag. When T1 and T2 are relatively high (higher than 230 °C), the processing difficulty and processing cost of heating the first melting layer and the second melting layer during the preparation of the packaging bag will increase. It is defined that 200 °C ≤ T1 ≤ 230 °C, 200 °C ≤ T2 ≤ 230 °C, and T1 = T2, thereby making it convenient for the packaging bag to keep hermetically sealed at the normal operating temperature of the electrode assembly, and to reduce the processing difficulty and processing cost.

In some embodiments of this application, 205 °C ≤ T1 ≤ 215 °C, and 205 °C ≤ T2 ≤ 215 °C, thereby making it more convenient for the packaging bag to keep hermetically sealed at the normal operating temperature of the electrode assembly, and to reduce the processing difficulty and processing cost.

In some embodiments of this application, a thickness H1 of the first melting layer and a thickness H2 of the second melting layer satisfy: 15 µm ≤ H1 ≤ 25 µm, and 15 µm ≤ H2 ≤ 25 µm. When H1 and H2 are relatively small (less than 15 µm), the thickness of the first melting layer or the second melting layer is prone to be thin, resulting in corrosion of the first metal layer or the second metal layer. When H1 and H2 are relatively large (greater than 25 µm), the space occupied by the first melting layer or the second melting layer is relatively large, resulting in space waste. It is defined that 15 µm ≤ H1 ≤ 25 µm and 15 µm ≤ H2 ≤ 25 µm, thereby reducing the risk of corrosion of the first metal layer or the second metal layer, reducing the space waste caused by the first melting layer or the second melting layer, and in turn, improving the space efficiency of the packaging bag.

In some embodiments of this application, 18 µm ≤ H1 ≤ 22 µm and 18 µm ≤ H2 ≤ 22 µm, thereby further reducing the risk of corrosion of the first metal layer or the second metal layer, and reducing the space waste caused by the first melting layer or the second melting layer, and in turn, improving the space efficiency of the packaging bag.

In some embodiments of this application, the first lateral edge abuts the second lateral edge, so that the first packaging film can form an accommodation portion by being wound and then flattened.

In some embodiments of this application, the first lateral edge and the second lateral edge are spaced apart from each other. An opening is provided between the first lateral edge and the second lateral edge. The second packaging film covers the opening, so that the first packaging film can form the accommodation portion by folding along a crease or by indentation.

In some embodiments of this application, the second packaging film includes a first surface. Both the first lateral edge and the second lateral edge are connected to the first surface. The first surface includes a first region and a second region connected to the first packaging film; the first region is located on one side, away from the second lateral edge, of the first lateral edge. The second region is located on one side, away from the first lateral edge, of the second lateral edge.

Along the first direction, a width of the second packaging film is 5 mm to 80 mm. When the width of the second packaging film is relatively small (less than 5 mm), the connection area between the second packaging film and the first packaging film is prone to be small, resulting in low connection strength between the second packaging film and the first packaging film. When the width of the second packaging film is relatively large (greater than 80 mm), the area of the second packaging film is prone to be larger than the area of the top wall, thereby making it inconvenient for the second packaging film to fit the accommodation portion. The width of the second packaging film is defined to be 5 mm to 80 mm, thereby increasing the connection strength between the second packaging film and the first packaging film, and making it convenient for the second packaging film to fit the accommodation portion. The width of the first region is greater than or equal to 1.2 mm, and the width of the second region is greater than or equal to 1.2 mm, so as to limit the minimum connection area between the second packaging film and the first packaging film, thereby reducing the risk that the small connection area leads to low connection strength between the second packaging film and the first packaging film, and improving the sealing performance of the packaging bag.

In some embodiments of this application, the width of the second packaging film is 5 mm to 45 mm, thereby further increasing the connection strength between the second packaging film and the first packaging film, and making it convenient for the second packaging film to fit the accommodation portion. The width of the first region is greater than or equal to 2.5 mm, and the width of the second region is greater than or equal to 2.5 mm, so as to further limit the minimum connection area between the second packaging film and the first packaging film, thereby reducing the risk that the small connection area leads to low connection strength between the second packaging film and the first packaging film, and improving the sealing performance of the packaging bag.

In some embodiments of this application, a sum S1 of areas of the first region and the second region, and a total area S2 of the first surface, satisfy: 30% ≤ S1/S2 ≤ 100%, so as to limit the minimum connection area between the second packaging film and the first packaging film, thereby reducing the risk that the small connection area leads to low connection strength between the second packaging film and the first packaging film, and improving the sealing performance of the packaging bag.

In some embodiments of this application, the accommodation portion includes a top wall, a bottom wall, and two bend portions and two connecting portions connected between the top wall and the bottom wall. The top wall and the bottom wall are arranged opposite to each other along the third direction. The two bend portions are arranged along the first direction, so as to seal the region between the top wall and the bottom wall in the first direction. The two connecting portions are arranged along the second direction, and the top seal portion and the bottom seal portion each are connected to one of the connecting portions, so as to seal the region between the top wall and the bottom wall in the second direction. The first lateral edge and the second lateral edge are disposed on the top wall, and extend to the top seal portion and the bottom seal portion through the connecting portion. The second packaging film is disposed on the top wall, and extends into the top seal portion and the bottom seal portion through the connecting portion, so as to seal the region between the first lateral edge and the second lateral edge, and improve the sealing performance of the packaging bag.

An embodiment of this application further provides a battery cell. The battery cell includes an electrode assembly and the packaging bag according to any one of the above embodiments. The electrode assembly is accommodated in the accommodation portion.

In some embodiments of this application, along a thickness direction of the battery cell, a thickness of the battery cell is less than or equal to 2 mm to meet the requirement of an ultra-thin battery cell.

In some embodiments of this application, the battery cell further includes a tab. One end of the tab is connected to the electrode assembly, and another end of the tab extends out from the top seal portion or the bottom seal portion, so as to be electrically connected to an external circuit.

In some embodiments of this application, the battery cell further includes an adhesive film. The adhesive film is adhered between the electrode assembly and the first packaging film without overlapping the second packaging film. In this way, the second packaging film can utilize the space occupied by the adhesive film in the thickness direction of the battery cell, thereby improving the space efficiency of the second packaging film in the accommodation portion, and in turn, increasing the energy density of the battery cell.

An embodiment of this application further provides an electrical device. The electrical device includes the battery cell disclosed in any one of the above embodiments.

In the packaging bag, battery cell, and electrical device, the second packaging film is configured to cover and connect the first lateral edge and the second lateral edge, so that the packaging bag wraps around to form an accommodation portion. The packaging bag forms a top seal portion, the accommodation portion, and a bottom seal portion sequentially in the second direction. The first lateral edge and the second lateral edge each extend through the top seal portion, the accommodation portion, and the bottom seal portion in sequence. The second packaging film is configured to seal a region between the first lateral edge and the second lateral edge to improve the sealing performance of the packaging bag. In addition, the top seal portion, the accommodation portion, and the bottom seal portion each perform packaging on both sides of the first direction through the bend portion of the first packaging film, thereby reducing the space occupied by the packaging bag in the first direction in contrast to the existing packaging method in which a side seal edge is disposed, and in turn, improving the space efficiency of the packaging bag.

### BRIEF DESCRIPTION OF DRAWINGS

FIG. 1 is a schematic structural diagram of a packaging bag from a first viewing angle according to an embodiment of this application;
FIG. 2 is a schematic structural diagram of a packaging bag from a second viewing angle according to an embodiment of this application;
FIG. 3 is a cross-sectional view obtained by sectioning along an A-A section line shown in FIG. 1;
FIG. 4 is a cross-sectional view obtained by sectioning along a B-B section line shown in FIG. 1;
FIG. 5 is a schematic structural diagram of a packaging bag according to another embodiment of this application;
FIG. 6 is a schematic structural diagram of a battery cell from a first viewing angle according to an embodiment of this application;
FIG. 7 is a schematic structural diagram of a battery cell from a second viewing angle according to an embodiment of this application;
FIG. 8 is a schematic structural diagram of a tab of a battery cell according to an embodiment of this application; and
FIG. 9 is a schematic structural diagram of an electrical device according to an embodiment of this application.

### List of reference numerals:

packaging bag 100
battery cell 200
electrical device 300
first packaging film 10
first metal layer 10a
first melting layer 10b
protection layer 10c
first lateral edge 101
second lateral edge 102
top seal portion 11
accommodation portion 12
top wall 121
bottom wall 122
bend portion 123
connecting portion 124
discrete portion 1241
bottom seal portion 13
second packaging film 20
second metal layer 20a
second melting layer 20b
first surface 21
first region 211
second region 212
electrode assembly 30
tab 40
adhesive film 50
first direction X
second direction Y
third direction Z

This application is further described below with reference to the following specific embodiments and the foregoing drawings.

### DETAILED DESCRIPTION

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. When a value is considered to be "equal" to another value, it means that the two values are equal within a preset deviation range of 5%. In other words, when at least one of the two values fluctuates within the preset deviation range, it is still determined that the values are approximately equal even if the values are not exactly equal. When a ratio of one value to another is considered to be "1: 1", it means that the two values are equal within a preset deviation range of 5%. In other words, when at least one of the two values fluctuates within the preset deviation range, it is still determined that the values are approximately equal even if the values are not exactly equal.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

Understandably, considering the actual process tolerance, the term "perpendicular" or "vertical" used in the technical solutions of this application is used to describe an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

The applicant hereof finds that the packaging bag for an existing ultra-thin battery cell is typically made of an aluminum laminated film by indentation, folding, and hot-press sealing. The packaging bag includes packaging edges in a length direction and a width direction of the battery cell. The packaging edges occupy a relatively large space in the length direction and a thickness direction, resulting in low space efficiency of the battery cell.

An embodiment of this application provides a packaging bag configured to accommodate an electrode assembly. The packaging bag includes a first packaging film and a second packaging film. The first packaging film includes a first lateral edge and a second lateral edge arranged along a first direction. The first lateral edge and the second lateral edge extend along a second direction. Along a third direction, the second packaging film is configured to cover and connect the first lateral edge and the second lateral edge, so that the packaging bag wraps around to form an accommodation portion. The packaging bag forms a top seal portion, the accommodation portion, and a bottom seal portion sequentially in the second direction. The accommodation portion is configured to accommodate the electrode assembly. The first direction, the second direction, and the third direction are perpendicular to each other.

In the packaging bag, the second packaging film is configured to cover and connect the first lateral edge and the second lateral edge, so that the packaging bag wraps around to form an accommodation portion. The packaging bag forms a top seal portion, the accommodation portion, and a bottom seal portion sequentially in the second direction. The first lateral edge and the second lateral edge each extend through the top seal portion, the accommodation portion, and the bottom seal portion in sequence. The second packaging film is configured to seal a region between the first lateral edge and the second lateral edge to improve the sealing performance of the packaging bag. In addition, the top seal portion, the accommodation portion, and the bottom seal portion each perform packaging on both sides of the first direction through the bend portion of the first packaging film, thereby reducing the space occupied by the packaging bag in the first direction in contrast to the existing packaging method in which a side seal edge is disposed, and in turn, improving the space efficiency of the packaging bag.

The following further describes the embodiments of this application with reference to drawings.

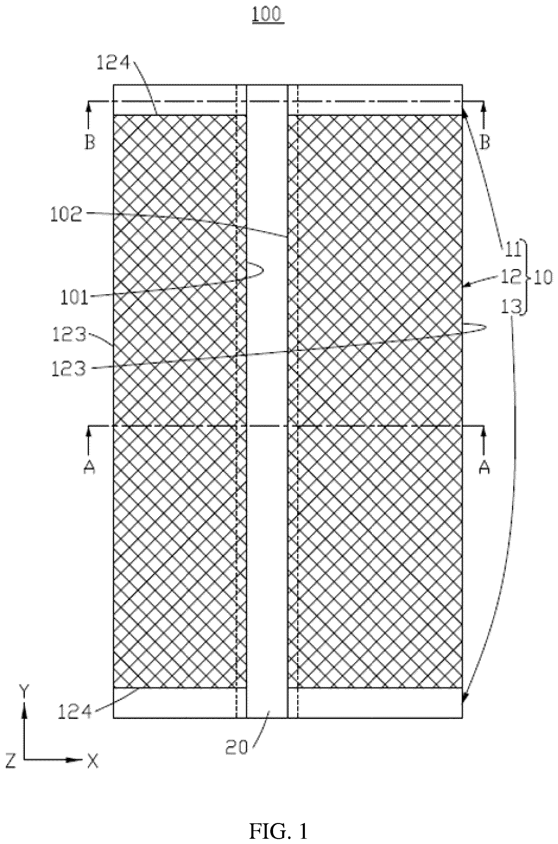

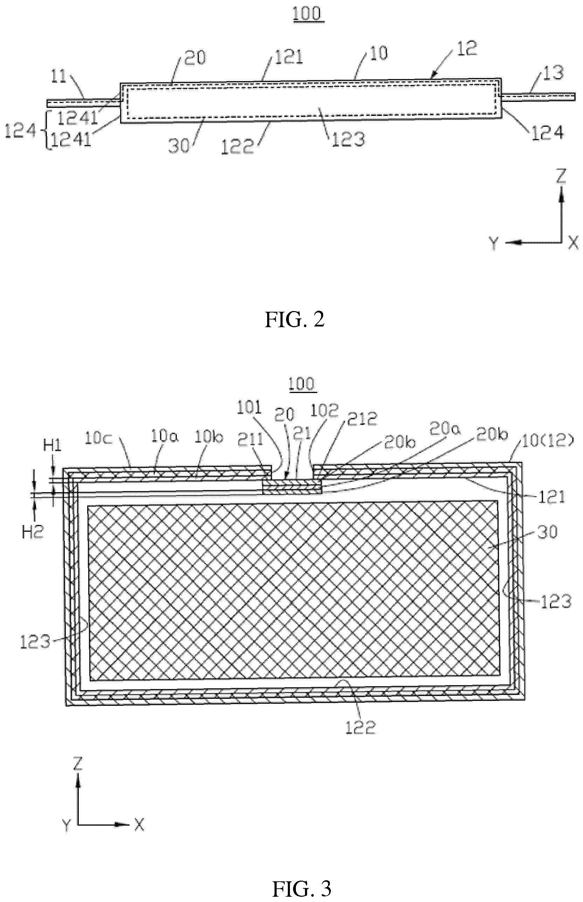

Referring to FIG. 1 and FIG. 2, an embodiment of this application provides a packaging bag 100. The packaging bag 100 is configured to accommodate an electrode assembly 30. The packaging bag 100 includes a first packaging film 10 and a second packaging film 20. The first packaging film 10 is configured to form a housing structure for accommodating the electrode assembly 30. The second packaging film 20 is configured to be connected to the first packaging film 10 to seal the housing structure formed by the first packaging film 10.

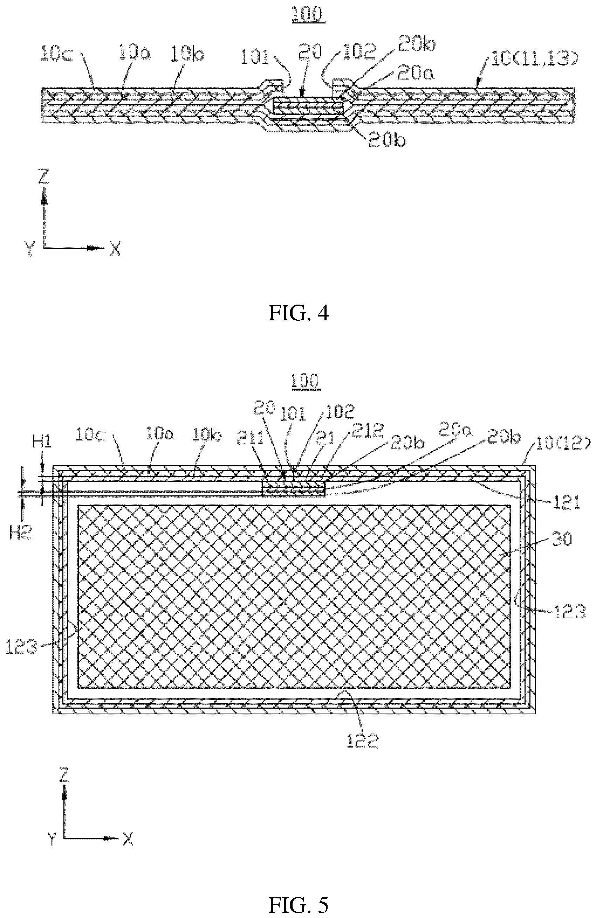

Referring to FIG. 3 and FIG. 4, the first packaging film 10 includes a first lateral edge 101 and a second lateral edge 102 arranged along a first direction X. The first lateral edge 101 and the second lateral edge 102 extend along a second direction Y. Specifically, the first packaging film 10 is unfolded first, and then a portion, close to the first lateral edge 101, of the first packaging film 10 and a portion, close to the second lateral edge 102, of the first packaging film 10 are bent toward each other in the first direction X, so that the first packaging film 10 forms a housing structure for accommodating the electrode assembly 30.

Along a third direction Z, the second packaging film 20 is configured to cover and connect the first lateral edge 101 and the second lateral edge 102, so that the packaging bag 100 wraps around to form an accommodation portion 12. The packaging bag forms a top seal portion 11, the accommodation portion 12, and a bottom seal portion 13 sequentially in the second direction Y. The accommodation portion 11 forms a cavity structure. The accommodation portion 11 is configured to accommodate the electrode assembly 30. The first packaging film 10 located at the top seal portion 11 forms a stacked structure. The first packaging film 10 located at the bottom seal portion 13 forms a stacked structure. The top seal portion 11 and the bottom seal portion 13 are configured to seal two ends of the accommodation portion 12 in the second direction Y respectively. The first lateral edge 101 and the second lateral edge 102 each extend through the top seal portion 11, the accommodation portion 12, and the bottom seal portion 13 in sequence. The second packaging film 20 is configured to seal a region between the first lateral edge 101 and the second lateral edge 102 to improve the sealing performance of the packaging bag 100.

The first direction X, the second direction Y, and the third direction Z are perpendicular to each other. Optionally, the first direction X is the width direction of the packaging bag 100, the second direction Y is the length direction of the packaging bag 100, and the third direction Z is the thickness direction of the packaging bag 100.

Understandably, when observed along the second direction Y, the portion, located at the accommodation portion 12, of the first packaging film 10 is formed by folding along a crease; or, a portion, located at the accommodation portion 12, of the first packaging film 10 is formed by indentation; or, a portion, located at the accommodation portion 12, of the first packaging film 10 is formed by flattening after winding.

In the packaging bag 100, the second packaging film 20 is configured to cover and connect the first lateral edge 101 and the second lateral edge 102, so that the packaging bag 100 wraps around to form an accommodation portion 12. The packaging bag forms a top seal portion 11, the accommodation portion 12, and a bottom seal portion 13 sequentially in the second direction Y. The first lateral edge 101 and the second lateral edge 102 each extend through the top seal portion 11, the accommodation portion 12, and the bottom seal portion 13 in sequence. The second packaging film 20 is configured to seal a region between the first lateral edge 101 and the second lateral edge 102 to improve the sealing performance of the packaging bag 100. In addition, the top seal portion 11, the accommodation portion 12, and the bottom seal portion 13 each perform packaging on both sides of the first direction X through the bend portion of the first packaging film 10, thereby reducing the space occupied by the packaging bag 100 in the first direction X in contrast to the existing packaging method in which a side seal edge is disposed, and in turn, improving the space efficiency of the packaging bag 100.

Still referring to FIG. 3, in some embodiments, the second packaging film 20 is connected to one side of the first packaging film 10, the side facing the electrode assembly 30. In this way, it is convenient to connect the second packaging film 20 to the first packaging film 10 on a side provided with a melting layer.

Understandably, in some other embodiments, the second packaging film 20 is connected to one side of the first packaging film 10, the side facing away from the electrode assembly 30.

Referring to FIG. 3 and FIG. 4, in some embodiments, the first packaging film 10 includes a first metal layer 10a as well as a first melting layer 10b and a protection layer 10c located on two sides, respectively, of the first metal layer 10a in a thickness direction. The first melting layer 10b is configured to be adjacent to the electrode assembly 30, so as to be connected to the second packaging film 20. The protection layer 10c is configured to face away from the electrode assembly 30 so as to protect the outer peripheral surface of the packaging bag 100.

Optionally, the first metal layer 10a is an aluminum layer, the first melting layer 10b is a polypropylene layer, and the protection layer 10c is a nylon layer.

The second packaging film 20 includes a second metal layer 20a and two second melting layers 20b located on two sides, respectively, of the second metal layer 20a in a thickness direction. Optionally, the second metal layer 20a is an aluminum layer, and the second melting layer 20b is a polypropylene layer.

One of the second melting layers 20b located at the accommodation portion 12 is connected to the first melting layer 10b, so as to seal the region between the first lateral edge 101 and the second lateral edge 102 of the accommodation portion 12. Each of the two second melting layers 20b located at the top seal portion 11 is connected to an adjacent first melting layer 10b, so as to seal the region between the first lateral edge 101 and the second lateral edge 102 of the top seal portion 11. Each of the two second melting layers 20b located at the bottom seal portion 13 is connected to an adjacent first melting layer 10b, so as to seal the region between the first lateral edge 101 and the second lateral edge 102 located at the bottom seal portion 13. The second melting layer 20b is connected to the first melting layer 10b to improve the sealing performance of the packaging bag 100.

In some embodiments, another second melting layer 20b located at the accommodation portion 12 is connected to the electrode assembly 30 to improve the stability of the electrode assembly 30 in the packaging bag 100.

In some embodiments, a melting point T1 of the first melting layer 10b and a melting point T2 of the second melting layer 20b satisfy: 200 °C ≤ T1 ≤ 230 °C, 200 °C ≤ T2 ≤ 230 °C, and T1 = T2. Understandably, "T1 = T2" does not mean exact equality, but may mean equality with an error of 5% or less. In this way, it is convenient for the first melting layer 10b and the second melting layer 20b to melt and connect together at approximately the same temperature, thereby improving the sealing performance of the first melting layer 10b and the second melting layer 20b. In addition, when T1 and T2 are relatively low (less than 200 °C), the first melting layer 10b or the second melting layer 20b are prone to melt at the normal operating temperature of the electrode assembly 30, thereby impairing the sealing performance of the packaging bag 100. When T1 and T2 are relatively high (higher than 230 °C), the processing difficulty and processing cost of heating the first melting layer 10b and the second melting layer 20b during the preparation of the packaging bag 100 will increase. It is defined that 200 °C ≤ T1 ≤ 230 °C, 200 °C ≤ T2 ≤ 230 °C, and T1 = T2, thereby making it convenient for the packaging bag 100 to keep hermetically sealed at the normal operating temperature of the electrode assembly 30, and to reduce the processing difficulty and processing cost.

Optionally, T1 and T2 may be 200 °C, 205 °C, 210 °C, 215 °C, 225 °C, 230 °C, or any other value falling within a range of 200 °C to 230 °C.

Further, 205 °C ≤ T1 ≤ 215 °C, and 205 °C ≤ T2 ≤ 215 °C, thereby making it more convenient for the packaging bag 100 to keep hermetically sealed at the normal operating temperature of the electrode assembly 30, and to reduce the processing difficulty and processing cost.

Still referring to FIG. 3, in some embodiments, the thickness H1 of the first melting layer 10b and the thickness H2 of the second melting layer 20b satisfy: 15 µm ≤ H1 ≤ 25 µm, and 15 µm ≤ H2 ≤ 25 µm. When H1 and H2 are relatively small (less than 15 µm), the thickness of the first melting layer 10b or the second melting layer 20b is prone to be thin, resulting in corrosion of the first metal layer 10a or the second metal layer 20a. When H1 and H2 are relatively large (greater than 25 µm), the space occupied by the first melting layer 10b or the second melting layer 20b is relatively large, resulting in space waste. It is defined that 15 µm ≤ H1 ≤ 25 µm and 15 µm ≤ H2 ≤ 25 µm, thereby reducing the risk of corrosion of the first metal layer 10a or the second metal layer 20a, reducing the space waste caused by the first melting layer 10b or the second melting layer 20b, and in turn, improving the space efficiency of the packaging bag 100.

Optionally, H1 may be 15 µm, 16 µm, 17 µm, 18 µm, 19 µm, 20 µm, or any other value in the range of 15 µm ≤ H1 ≤ 25 µm. H2 may be 15 µm, 16 µm, 17 µm, 18 µm, 19 µm, 20 µm, or any other value in the range of 15 µm ≤ H2 ≤ 25 µm.

Further, 18 µm ≤ H1 ≤ 22 µm and 18 µm ≤ H2 ≤ 22 µm, thereby further reducing the risk of corrosion of the first metal layer 10a or the second metal layer 20a, reducing the space waste caused by the first melting layer 10b or the second melting layer 20b, and in turn, improving the space efficiency of the packaging bag 100.

In some embodiments, the thickness of the second packaging film 20 is 50 µm to 100 µm. When the thickness of the second packaging film 20 is relatively small (less than 50 µm), the structural strength of the second packaging film 20 is prone to be low. When the thickness of the second packaging film 20 is relatively large (greater than 100 µm), the second packaging film 20 is prone to occupy a large space in the accommodation portion 12, thereby resulting in space waste and being adverse to improving the space efficiency of the electrode assembly 30 in the accommodation portion 12. The thickness of the second packaging film 20 is defined to be 50 µm to 100 µm, thereby increasing the structural strength of the second packaging film 20, reducing the space waste caused by the second packaging film 20 in the accommodation portion 12, and in turn, improving the space efficiency of the electrode assembly 30 in the accommodation portion 12.

Optionally, the thickness of the second packaging film 20 may be 50 µm, 55 µm, 60 µm, 65 µm, 70 µm, 75 µm, 80 µm, 85 µm, 90 µm, 95 µm, 100 µm, or any other value within the range of 50 µm to 100 µm.

Furthermore, the thickness of the second packaging film 20 is 50 µm to 70 µm, thereby further increasing the structural strength of the second packaging film 20, reducing the space waste caused by the second packaging film 20 in the accommodation portion 12, and improving the space efficiency of the electrode assembly 30 in the accommodation portion 12.

Referring to FIG. 1, FIG. 2, and FIG. 3, in some embodiments, the accommodation portion 12 includes a top wall 121, a bottom wall 122, and two bend portions 123 and two connecting portions 124 connected between the top wall 121 and the bottom wall 122. The top wall 121 and the bottom wall 122 are arranged opposite to each other along the third direction Z. The two bend portions 123 are arranged along the first direction X, so as to seal the region between the top wall 121 and the bottom wall 122 in the first direction X. The two connecting portions 124 are arranged along the second direction Y, and the top seal portion 11 and the bottom seal portion 13 each are connected to one of the connecting portions 124, so as to seal the region between the top wall 121 and the bottom wall 122 in the second direction Y. Specifically, each connecting portion 124 includes two discrete portions 1241 arranged along the third direction Z. For example, in the connecting portion 124 connected to the top seal portion 11, one of the discrete portions 1241 connects the top wall 121 and one end of the first packaging portion 11, the end facing the accommodation portion 12; and the other discrete portion 1241 connects the bottom wall 122 and one end of the first packaging portion 11, the end facing the accommodation portion 12.

The first lateral edge 101 and the second lateral edge 102 are disposed on the top wall 121, and extend to the top seal portion 11 and the bottom seal portion 13 through the connecting portion 124. Correspondingly, the second packaging film 20 is disposed on the top wall 121, and extends into the top seal portion 11 and the bottom seal portion 13 through the connecting portion 124, so as to seal the region between the first lateral edge 101 and the second lateral edge 102, and improve the sealing performance of the packaging bag 100. Specifically, along the third direction Z, projections of the first lateral edge 101 and the second lateral edge 102 both lie within the projection of the second packaging film 20.

In some embodiments, the first lateral edge 101 and the second lateral edge 102 are spaced apart from each other. An opening 103 is provided between the first lateral edge 101 and the second lateral edge 102. The second packaging film 20 covers the opening 103, so that the first packaging film 10 can form the accommodation portion 12 by folding along a crease or by indentation.

Referring to FIG. 5, in some embodiments, the first lateral edge 101 abuts the second lateral edge 102, so that the first packaging film 10 can form an accommodation portion 12 by being wound and then flattened.

Still referring to FIG. 3, in some embodiments, the second packaging film 20 includes a first surface 21. Both the first lateral edge 101 and the second lateral edge 102 are connected to the first surface 21. The first surface 21 includes a first region 211 and a second region 212 connected to the first packaging film 10. The first region 211 is located on one side, away from the second lateral edge 102, of the first lateral edge 101. The second region 212 is located on one side, away from the first lateral edge 101, of the second lateral edge 102.

Along the first direction X, the width of the second packaging film 20 is 5 mm to 80 mm. When the width of the second packaging film 20 is relatively small (less than 5 mm), the connection area between the second packaging film 20 and the first packaging film 10 is prone to be small, resulting in low connection strength between the second packaging film 20 and the first packaging film 10. When the width of the second packaging film 20 is relatively large (greater than 80 mm), the area of the second packaging film 20 is prone to be larger than the area of the top wall 121, thereby making it inconvenient for the second packaging film 20 to fit the accommodation portion 12. The width of the second packaging film 20 is defined to be 5 mm to 80 mm, thereby increasing the connection strength between the second packaging film 20 and the first packaging film 10, and making it convenient for the second packaging film 20 to fit the accommodation portion 12.

Optionally, the width of the second packaging film 20 may be 5 mm, 10 mm, 15 mm, 20 mm, 25 mm, 30 mm, 35 mm, 40 mm, 45 mm, 55 mm, 60 mm, 65 mm, 70 mm, 75 mm, 80 mm, or any other value within the range of 5 mm to 80 mm.

Further, the width of the second packaging film 20 is defined to be 5 mm to 45 mm, thereby further increasing the connection strength between the second packaging film 20 and the first packaging film 10, and making it convenient for the second packaging film 20 to fit the accommodation portion 12.

In some embodiments, the width of the first region 211 is greater than or equal to 1.2 mm, and the width of the second region 212 is greater than or equal to 1.2 mm, so as to limit the minimum connection area between the second packaging film 20 and the first packaging film 10, thereby reducing the risk that the small connection area leads to low connection strength between the second packaging film 20 and the first packaging film 10, and improving the sealing performance of the packaging bag 100.

Further, the width of the first region 211 is greater than or equal to 2.5 mm, and the width of the second region 212 is greater than or equal to 2.5 mm, so as to further limit the minimum connection area between the second packaging film 20 and the first packaging film 10, thereby reducing the risk that the small connection area leads to low connection strength between the second packaging film 20 and the first packaging film 10, and improving the sealing performance of the packaging bag 100.

In some embodiments, a sum S1 of areas of the first region 211 and the second region 212, and a total area S2 of the first surface 21, satisfy: 30% ≤ S1/S2 ≤ 100%, so as to limit the minimum connection area between the second packaging film 20 and the first packaging film 10, thereby reducing the risk that the small connection area leads to low connection strength between the second packaging film 20 and the first packaging film 10, and improving the sealing performance of the packaging bag 100. Understandably, when an opening 103 is provided between the first lateral edge 101 and the second lateral edge 102, 30% ≤ S1/S2 < 100%; and, when the first lateral edge 101 abuts the second lateral edge 102, S1/S2 = 100%.

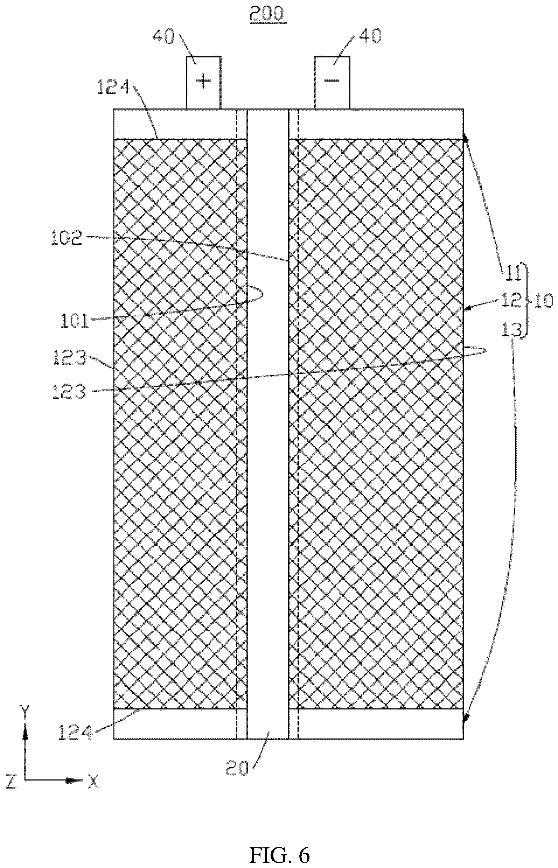

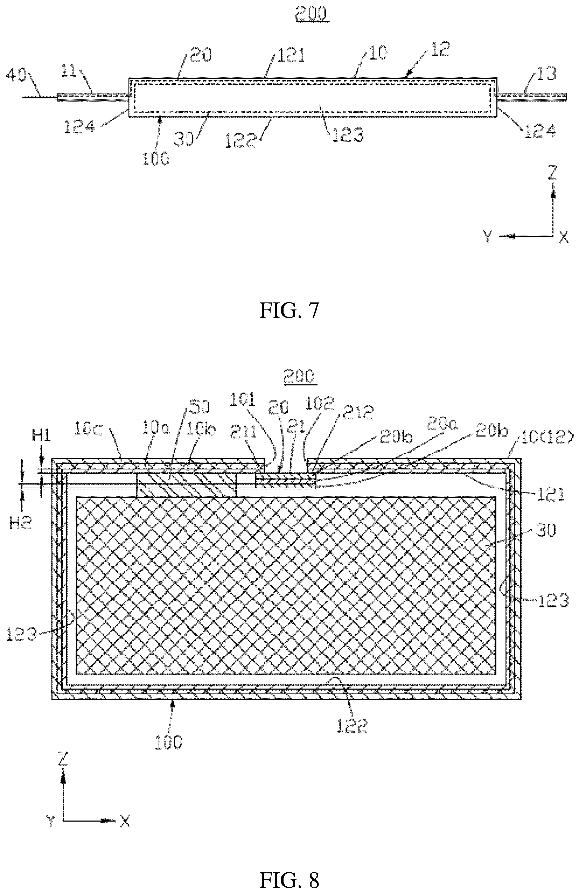

Referring to FIG. 6 and FIG. 7, an embodiment of this application provides a battery cell 200. The battery cell 200 is applicable to, but not limited to use in, a secondary battery. The secondary battery is a battery that is reusable through activation of an active material in the battery by charging the battery that is discharged.

The battery cell 200 includes an electrode assembly 30 and the packaging bag 100 according to any one of the above embodiments. The electrode assembly 30 is accommodated in the accommodation portion 12. The electrode assembly 30 is configured to convert chemical energy into electrical energy. The electrode assembly 30 includes a positive electrode plate, a separator, and a negative electrode plate disposed in sequence. Optionally, the positive electrode plate, the separator, and the negative electrode plate are a jelly-roll structure or a stacked-type structure.

In the battery cell 200, the second packaging film 20 is configured to cover and connect the first lateral edge 101 and the second lateral edge 102, so that the packaging bag 100 wraps around to form an accommodation portion 12. The packaging bag forms a top seal portion 11, the accommodation portion 12, and a bottom seal portion 13 sequentially in the second direction Y. The first lateral edge 101 and the second lateral edge 102 each extend through the top seal portion 11, the accommodation portion 12, and the bottom seal portion 13 in sequence. The second packaging film 20 is configured to seal a region between the first lateral edge 101 and the second lateral edge 102 to improve the sealing performance of the packaging bag 100. In addition, the top seal portion 11, the accommodation portion 12, and the bottom seal portion 13 each perform packaging on both sides of the first direction X through the bend portion of the first packaging film 10, thereby reducing the space occupied by the packaging bag 100 in the first direction X in contrast to the existing packaging method in which a side seal edge is disposed, and in turn, improving the space efficiency of the packaging bag 100 and the energy density of the battery cell 200.

In some embodiments, along the thickness direction of the battery cell 200, the thickness of the battery cell 200 is less than or equal to 2 mm, and the first direction X, the second direction Y, and the thickness direction of the battery cell 200 are perpendicular to each other, so as to meet the requirement of an ultra-thin battery cell.

Referring to FIG. 6 and FIG. 7, in some embodiments, the battery cell 200 further includes a tab 40. One end of the tab 40 is connected to the electrode assembly 30, and another end of the tab 40 extends out from the top seal portion 11 and/or the bottom seal portion 13, so as to be electrically connected to an external circuit.

Referring to FIG. 8 together, in some embodiments, the battery cell 200 further includes an adhesive film 50. The adhesive film 50 is adhered between the electrode assembly 30 and the first packaging film 10 without overlapping the second packaging film 20. In this way, the second packaging film 20 can utilize the space occupied by the adhesive film 50 in the thickness direction of the battery cell 200, thereby improving the space efficiency of the second packaging film 20 in the accommodation portion 12, and in turn, increasing the energy density of the battery cell 200.

In some embodiments, along the thickness direction of the battery cell 200, the thickness of the adhesive film 50 is 20 µm to 40 µm.

Optionally, the thickness of the adhesive film 50 may be 20 µm, 25 µm, 30 µm, 35 µm, 40 µm, or any other value within the range of 20 µm to 40 µm.

In some embodiments, when the second packaging film 20 covers the top wall 121, no adhesive film 50 needs to be disposed. The second packaging film 20 can increase the structural strength of the top wall 121, thereby making it convenient to dispose an adhesive layer on one side of the top wall 121, where the side faces away from the electrode assembly 30, and the adhesive layer is configured to be connected to a battery compartment.

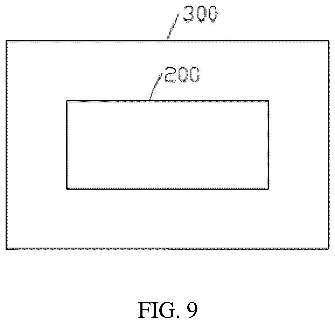

Referring to FIG. 9, an embodiment of this application further provides an electrical device 300. The electrical device includes the battery cell 200 disclosed in any one of the above embodiments. The electrical device 300 may be a vehicle, a mobile phone, a portable device, a notebook computer, a ship, a spacecraft, an electric toy, a power tool, or the like.

To sum up, in the packaging bag 100, the battery cell 200, and the electrical device 300, the second packaging film 20 is configured to cover and connect the first lateral edge 101 and the second lateral edge 102, so that the packaging bag 100 wraps around to form an accommodation portion 12. The packaging bag forms a top seal portion 11, the accommodation portion 12, and a bottom seal portion 13 sequentially in the second direction Y. The first lateral edge 101 and the second lateral edge 102 each extend through the top seal portion 11, the accommodation portion 12, and the bottom seal portion 13 in sequence. The second packaging film 20 is configured to seal a region between the first lateral edge 101 and the second lateral edge 102 to improve the sealing performance of the packaging bag 100. In addition, the top seal portion 11, the accommodation portion 12, and the bottom seal portion 13 each perform packaging on both sides of the first direction X through the bend portion of the first packaging film 10, thereby reducing the space occupied by the packaging bag 100 in the first direction X in contrast to the existing packaging method in which a side seal edge is disposed, and in turn, improving the space efficiency of the packaging bag 100 and the energy density of the battery cell 200.

In addition, a person skilled in the art may make other variations to this application without departing from the essence of this application. The variations made based on the essence of this application still fall within the protection scope of this application.

## Claims

1. A packaging bag (100), configured to accommodate an electrode assembly (30), **characterized in that** the packaging bag (100) comprises a first packaging film (10) and a second packaging film (20);
the first packaging film (10) comprises a first lateral edge (101) and a second lateral edge (102) arranged opposite to each other along a first direction (X), and the first lateral edge (101) and the second lateral edge (102) extend along a second direction (Y);
along a third direction (Z), the second packaging film (20) covers and connects the first lateral edge (101) and the second lateral edge (102), and wraps around to form an accommodation portion (12); the packaging bag (100) forms a top seal portion (11), the accommodation portion (12), and a bottom seal portion (13) sequentially in the second direction (Y); and the accommodation portion (12) is configured to accommodate the electrode assembly (30); and
the first direction (X), the second direction (Y), and the third direction (Z) are perpendicular to each other.

2. The packaging bag (100) according to claim 1, **characterized in that**, the second packaging film (20) is connected to one side of the first packaging film (10), the one side of the first packaging film (10) being facing the electrode assembly (30).

3. The packaging bag (100) according to claim 2, **characterized in that**, the first packaging film (10) comprises a first metal layer (10a); the first packaging film (10) further comprises a first melting layer and a protection layer (10c) located on two sides, respectively, of the first metal layer (10a) in a thickness direction;
the second packaging film (20) comprises a second metal layer (20b) and two second melting layers located on two sides, respectively, of the second metal layer (20b) in a thickness direction; and
one of the two second melting layers located at the accommodation portion (12) is connected to the first melting layer, each of the two second melting layers located at the top seal portion (11) is connected to an adjacent first melting layer, and each of the two second melting layers located at the bottom seal portion (13) is connected to an adjacent first melting layer.

4. The packaging bag (100) according to claim 3, **characterized in that**, the other of the two second melting layers located at the accommodation portion (12) is connected to the electrode assembly (30).

5. The packaging bag (100) according to claim 3, **characterized in that**, a melting point T1 of the first melting layer and a melting point T2 of the second melting layer satisfy: 200 °C ≤ T1 ≤ 230 °C, 200 °C ≤ T2 ≤ 230 °C, and T1 = T2.

6. The packaging bag (100) according to claim 3, **characterized in that**, a thickness H1 of the first melting layer and a thickness H2 of the second melting layer satisfy: 15 µm ≤ H1 ≤ 25 µm, and 15 µm ≤ H2 ≤ 25 µm.

7. The packaging bag (100) according to claim 1, **characterized in that**, the first lateral edge (101) abuts the second lateral edge (102).

8. The packaging bag (100) according to claim 1, **characterized in that**, the first lateral edge (101) and the second lateral edge (102) are spaced apart from each other, an opening is provided between the first lateral edge (101) and the second lateral edge (102), and the second packaging film (20) covers the opening.

9. The packaging bag (100) according to claim 7 or 8, **characterized in that**, the second packaging film (20) comprises a first surface (21); both the first lateral edge (101) and the second lateral edge (102) are connected to the first surface (21); the first surface (21) comprises a first region (211) and a second region (212) connected to the first packaging film (10); the first region (211) is located on one side of the first lateral edge (101) facing away from the second lateral edge (102); and the second region (212) is located on one side of the second lateral edge (102) facing away from the first lateral edge (101); and
along the first direction (X), a width of the second packaging film (20) is 5 mm to 80 mm, a width of the first region (211) is greater than or equal to 1.2 mm, and a width of the second region (212) is greater than or equal to 1.2 mm.

10. The packaging bag (100) according to claim 9, **characterized in that**, a sum S1 of areas of the first region (211) and the second region (212), and a total area S2 of the first surface (21), satisfy: 30% ≤ S1/S2 ≤ 100%.

11. The packaging bag (100) according to claim 1, **characterized in that**, the accommodation portion (12) comprises a top wall (121), a bottom wall (122), and two bend portions (123) and two connecting portions (124) connected between the top wall (121) and the bottom wall (122); the top wall (121) and the bottom wall (122) are arranged opposite to each other along the third direction (Z); the two bend portions (123) are arranged along the first direction (X); the two connecting portions (124) are arranged along the second direction (Y); and the top seal portion (11) and the bottom seal portion (13) each are connected to one of the two connecting portions (124);
the first lateral edge (101) and the second lateral edge (102) are disposed on the top wall (121), and extend to the top seal portion (11) and the bottom seal portion (13) through the connecting portion (124); and
the second packaging film (20) is disposed on the top wall (121), and extends into the top seal portion (11) and the bottom seal portion (13) through the connecting portion (124).

12. A battery cell (200), **characterized in that**, the battery cell (200) comprises an electrode assembly (30) and the packaging bag (100) according to any one of claims 1 to 11, and the electrode assembly (30) is accommodated in the accommodation portion (12).

13. The battery cell (200) according to claim 12, **characterized in that**, along a thickness direction of the battery cell (200), a thickness of the battery cell (200) is less than or equal to 2 mm.

14. The battery cell (200) according to claim 12, **characterized in that**, the battery cell (200) further comprises a tab (40), one end of the tab (40) is connected to the electrode assembly (30), and another end of the tab (40) extends out from the top seal portion (11) or the bottom seal portion (13).

15. The battery cell (200) according to claim 12, **characterized in that**, the battery cell (200) further comprises an adhesive film (50), the adhesive film (50) is adhered between the electrode assembly (30) and the first packaging film (10) without overlapping the second packaging film (20).

16. An electrical device (300), **characterized in that**, the electrical device (300) comprises the battery cell (200) according to any one of claims 12 to 15.
